# EUROPEAN PATENT APPLICATION

(11) **EP 3 695 720 A1**
(43) Date of publication of application: **19.08.2020**
(21) Application number: 19156655.3
(22) Date of filing: 12.02.2019
(51) Int. Cl.: A01M 7/00

(54) **UNMANNED AERIAL VEHICLE**

(71) Applicant: Bayer AG, 51373 Leverkusen (DE)
(72) Inventor: Faers, Malcolm, 40597 Düsseldorf (DE); Chapple, Andrew Charles, 40764 Langenfeld (DE)
(74) Representative: BIP Patents

(57) **Abstract**

The present invention relates to an unmanned aerial vehicle (UAV) 10 for application of an active ingredient to agricultural crops. The UAV comprises at least one liquid reservoir 20, at least one liquid application unit 30, a processing unit 40, at least one set of rotor blades 50, and a plurality of legs 60. The liquid reservoir is configured to hold a liquid comprising the active ingredient. The at least one liquid application unit is in fluid communication with the at least one liquid reservoir. The at least one liquid application unit is configured to receive at least one input from the processing unit. The at least one input is useable to activate the at least one liquid application unit. The unmanned aerial vehicle is configured to fly within an environment using the at least one set of rotor blades. The unmanned aerial vehicle is configured to land within the environment. The unmanned aerial vehicle is configured to walk on the plurality of legs to a location to apply the liquid to at least one plant. The location to apply the liquid is determined based on image analysis of one or more image of at least one image of the environment.

## Description

### FIELD OF THE INVENTION

The present invention relates to an unmanned aerial vehicle for application of an active ingredient to agricultural crops, and to a method for application of an active ingredient by an unmanned aerial vehicle to agricultural crops.

### BACKGROUND OF THE INVENTION

The general background of this invention is the application of active ingredients in liquid form to foliage, being applied by vehicles using for example boom sprayers. Active ingredients, such as herbicides, pesticides, insecticides and nutritional supplements, are required to be applied in agricultural environments. Controlling weeds, insects and diseases in crops is an important requirement for reducing losses in agriculture. This is commonly achieved by foliar spray of crops by spray application from tractors, backpack sprayers and unmanned aerial vehicles (UAV) such as drones and radio controlled helicopters. A disadvantage of all these application techniques is that typically, the whole field is sprayed. Furthermore, drift of the spray can occur resulting in unwanted off-target losses outside of the intended target spray area. There is a need to facilitate application in new ways, and to reduce the cost of such application. The general public increasingly also wishes to see a reduction in any environmental impact associated with such application.

### SUMMARY OF THE INVENTION

It would be advantageous to have improved means of applying active ingredients in agricultural environments.

The object of the present invention is solved with the subject matter of the independent claims, wherein further embodiments are incorporated in the dependent claims. It should be noted that the following described aspects and examples of the invention apply also for the unmanned aerial vehicle for application of an active ingredient to agricultural crops, and to the method for application of an active ingredient by an unmanned aerial vehicle to agricultural crops.

According to a first aspect, there is provided an unmanned aerial vehicle for application of an active ingredient to agricultural crops, comprising:
- at least one liquid reservoir;
- at least one liquid application unit;
- a processing unit;
- at least one set of rotor blades; and
- a plurality of legs.

The liquid reservoir is configured to hold a liquid comprising the active ingredient. The at least one liquid application unit is in fluid communication with the at least one liquid reservoir. The at least one liquid application unit is configured to receive at least one input from the processing unit, wherein the at least one input is useable to activate the at least one liquid application unit. The unmanned aerial vehicle is configured to fly within an environment using the at least one set of rotor blades. The unmanned aerial vehicle is configured to land within the environment. The unmanned aerial vehicle is configured to walk on the plurality of legs to a location to apply the liquid to at least one plant, and wherein the location is determined based on image analysis of one or more image of at least one image of the environment.

In other words, the unmanned aerial vehicle (UAV) such as a drone, can land and walk and apply an active ingredient, comprised within a liquid, to a plant. In this way, the UAV can stop or feather the rotation of the rotor blades used for lift, which mitigates movement of foliage caused by downdraught from the rotor blades. Such movement of foliage can make it difficult to accurately and efficiently apply the active ingredient, and thereby the UAV in landing to apply the active liquid can apply the active ingredient accurately and efficiently to plants.

The UAV or drone can also land, for example when the weather is inclement, and walk around the crop to spray where required. Thus, spraying of a crop can continue in conditions that would normally prohibit spraying using a UAV.

Furthermore, by landing and walking and applying the liquid containing the active ingredient to plants, the effect of the downdraught of the rotor blades leading to drifting away of a liquid applied in spray form can be mitigated.

Additionally, by landing and walking to a location the UAV can be stationary when the liquid is applied, which can be applied more accurately to a plant as a result of being applied from a non-moving platform.

Thus, imagery of an environment can be acquired by a drone, or indeed be acquired by a different platform that could have previously acquired the imagery. The imagery is transmitted to a processing unit, that again could be in the drone, or be external to the drone. The processing unit analyses the imagery to determine a location to which the drone should walk for activation of the liquid application unit carried by the drone. In this way, offline processing in a computer for example in a farmer's office of imagery acquired of a field can be used to determine in effect a map of locations where specific active ingredients, within a liquid, should be applied by a UAV (such as a drone) in that field.

In this way, in an example a drone can have a processing unit and be provided with imagery acquired by a different platform. The drone then analyses the imagery to determine a location to walk to and activate its liquid application unit. It could do this before or after it lands. Thus, the drone can be flying and determine a location for activation of its liquid application unit, fly to an appropriate site and land and then walk to the location and apply the liquid at that location. Or, the drone can land at a site, and analyse the imagery relating to the area in the vicinity of that site, and determine a location to walk to for application of the liquid.

In this way, in an example a drone can have a camera and acquire imagery that is relayed to a processing unit that is external to the drone, for example in a processing unit in a farmer's laptop by the side of the field. The processing unit analyses the imagery using image processing to determine a location the drone should walk to for activation of the liquid application unit. It could do this before or after it lands. Thus, the drone can be flying and acquire imagery as it is flying and this is relayed to the processing unit that determines a location to walk to after landing for activation of its liquid application unit which is relayed back to the drone. The drone then flies to an appropriate site and lands there and then walks to the location and applies the liquid at that location. Or, the drone can land at a site, and acquire imagery in the vicinity. That imagery is relayed back and forth to an external processing unit that analyse the imagery relating to the area in the vicinity of that site to determine a location to walk to for application of the liquid. The drone then applies the liquid at that location.

In this way, in an example a drone can have a camera and acquire imagery and have a processing unit that analyses the imagery using image processing to determine a location to walk to for activation of the liquid application unit. It could do this before or after it lands. Thus, the drone can be flying and acquire imagery as it is flying and this analysed by its processing unit to determine a location to walk to after landing for activation of its liquid application unit. The drone then flies to an appropriate site and lands there and then walks to the location and applies the liquid at that location. Or, the drone can land at a site, and acquires imagery in the vicinity. That imagery is analysed by the processing unit to determine a location for application of the liquid. The drone then lands and walks to and applies the liquid at that location.

In this manner, less active ingredient is required, because target weeds, insects, and disease can be treated directly instead on the entire crop. Also, because the liquid can be applied more efficiently to plants, less is required enabling a drone to treat a larger area with a smaller volume of liquid. Also, the effects of bad weather can be mitigated as the drone can continue spraying by landing. Thus, the drone can fly and spray and when required can land and continue spraying. Overall, a more effective spraying technology is provided.

In other words, a liquid carried by the unmanned aerial vehicle can be applied more efficiently over an environment, for example for weed and/or pest control, rather than being applied indiscriminately liquid can be applied only where required and applied efficiently and effectively at those locations, on the basis of analysis of acquired imagery. Thus, the unmanned aerial vehicle can treat a larger environment, because the liquid can be formulated for low volume applications and because only those areas of the environment that need to be treated are treated. In this way, costs are saved as less liquid and active ingredient is used, and time is saved as less areas of the environment are treated and these areas are treated more efficiently and effectively, and there are associated environmental benefits.

In an example, the processing unit is configured to carry out the analysis of the one or more image of the at least one image to determine the location for application of the liquid to the at least one plant.

In an example, analysis of the at least one image to determine the at least one location for application of the liquid comprises a determination of at least one type of weed, and/or comprises a determination of at least one type of disease, and/or comprises a determination of at least one type of pest, and/or comprises a determination of at least one type of insect, and/or comprises a determination of at least one type of nutritional deficiency.

In other words, the liquid application unit can be activated and the liquid applied in a manner to account for there being weeds to be controlled at a location and wherein the type of weed to be controlled can be taken into account, and/or account for their being diseases to be controlled at a location and wherein the type of disease to be controlled can be taken into account, and/or account for their being pests to be controlled at a location and wherein the type of pest to be controlled can be taken into account, and/or account for their being insects to be controlled at a location and wherein the type of insect to be controlled can be taken into account, and/or account for their being nutritional deficiencies to be mitigated at a location and wherein the type of nutritional deficiency to be mitigated can be taken into account.

Thus, an unmanned aerial vehicle such as a drone can fly around an environment such as a field, and on the basis of image processing of images acquired of the field, and a determination that there are weeds, and what the type of weed is and where it is located, and a liquid containing the required active ingredient to control that weed and/or that type of weed can be applied at the location of the weed. A drone can have a number of different reservoirs containing different liquids with different active ingredients, and on the basis of the identified weed the appropriate liquid can be applied over the weed. Also, there can be a number of different drones flying around the field, each with a different liquid within its liquid reservoir containing different active ingredients, and the different drones can apply the liquid they carry where required.

For example, in a specific example when a drone has a camera if that drone images a weed that requires application with the liquid it carries, then it can immediately apply that liquid to that weed. However, if a determination is made that that weed should be controlled by a different liquid then this information and the location of the weed and the type of liquid to be applied at that location can be communicated to a different drone, where that information could be communicated from the fist drone or via a processing unit that is external to the first drone, to a second drone that carries the correct liquid. This second drone then flies to the weed and applies the correct liquid over the weed. The unmanned aerial vehicle or vehicles operate in the same way with respect to controlling diseases, pests, insects and mitigating nutritional deficiencies.

In this way, the correct chemical is used in each location increasing the effectiveness of application, and there are associated environmental advantages because the most aggressive chemicals are used only where necessary.

In an example, a landing location for the unmanned aerial vehicle is determined based on image analysis of one or more image of the at least one image of the environment.

Thus, the unmanned aerial vehicle can be flying and be provided with a site to land, or determine a site to land itself. The site to land could be determined after a location for application of the liquid has already been made. Thus, a weed in a field can be identified and its location determined for example. An appropriate site for landing of the drone is then determined, and the drone walks to that location. The drone then applies the liquid as required. Or, the landing site can be determined before a location for application of the liquid is determined. Thus, the drone can be provided with one or a number of landing sites within a field, or the drone can determine the landing site itself. It lands at these sites, and either acquires imagery itself at that location which is processed to determine locations in that vicinity and walks to that location for application of the liquid, or the drone walks to that location and applies liquid at those locations on the basis of imagery acquired by a different platform.

In an example, the one or more image analysed for the determination of the landing location is the same as the one or more image analysed for the determination of the location to apply the liquid to at least one plant.

In an example, the one or more image analysed for the determination of the landing location is different to the one or more image analysed for the determination of the location to apply the liquid to at least one plant.

In an example, an end of each of the plurality of legs that is distal to an end that is connected to a body of the unmanned aerial vehicle comprises at least one stability structure.

In this way, the UAV such as a drone can safely land and then walk in different ground areas, such as dry hard ground, or soft or marshy ground, and even in rice paddies.

In an example, the at least one liquid application unit is moveable with respect to a body of the unmanned aerial vehicle. The processing unit of the unmanned aerial vehicle is configured to move the at least liquid application unit.

In this manner, the UAV can apply liquid in a very targeted manner to individual plants if required. This is because the UAV does not have to land and walk to a precise position with respect to the plant, as would be required for a fixed liquid application unit, but can land and walk to an appropriate position and then move the liquid application unit as required.

In an example, the at least one liquid application unit is mounted on at least one extendable arm.

This provides for better spraying and better spraying control.

In an example, when the unmanned aerial vehicle has landed and walked to the location for application of the liquid to at least one plant, the processor is configured to move the at least one liquid application unit to a specific location for activation of the at least one liquid application unit based on the image analysis of one or more image of the at least one image of the environment.

In this way, image processing is not used just for determining where in an environment a UAV should walk to apply the liquid in the environment, but is being used to determine specifically where to spray at that location, such as for example on specific plants or on specific parts of plants. Additionally image processing can be used to determine where the UAV should land, before walking to a location and then spraying in a controlled manner at that location. Thus, a fully automated system is facilitated that does not require any human input or control is provided.

In an example, the unmanned aerial vehicle comprises a camera connected to a body of the unmanned aerial vehicle, wherein the camera is configured to acquire the at least one image.

In an example, the camera is configured to move with respect to the body of the unmanned aerial vehicle. The processing unit of the unmanned aerial vehicle is configured to move the camera.

In this manner, as the UAV is flying around, the camera can be moved in order to image different parts of the environment without having to change an orientation of the UAV, as would be required if the camera was in a fixed position. Also, the UAV is able to land at an appropriate site, and then image the vegetation in its locality in order to determine locations for application of the liquid.

In an example, the unmanned aerial vehicle is configured to determine the location for application of the liquid after the unmanned aerial vehicle has landed within the environment.

In an example, the unmanned aerial vehicle is configured to determine the location for application of the liquid before the unmanned aerial vehicle has landed within the environment.

Thus, the UAV can fly around a field and determine where spraying is required, and then determine a place to land, then land and walk to the spraying location. However, in other situations, there may be few suitable places to land, and the UAV determines these from image processing and then lands. The UAV can then turn its rotors off and use a camera to determine is spraying is required in that locality. For example, the UAV could extend its camera in an upward direction, and scan the surrounding area. If an area, on the basis of image analysis, is one where spraying looks to be required, the UAV can walk to that location and spray plants, and if necessary again use image processing to take a closer look at the plants, in order to apply the sprayed liquid more effectively.

In an example, the unmanned aerial the vehicle comprises location determining means.

In an example, a determination is made to land and walk to the location to apply the liquid based on one or more of: a wind speed, a wind direction, a state of precipitation.

In an example, the unmanned aerial vehicle is configured to receive information from an external system relating to one or more of: the wind speed, the wind direction, the state of precipitation.

In an example, the unmanned aerial vehicle comprises one or more of: a wind speed sensor, a wind direction sensor, a precipitation sensor.

Thus, the unmanned aerial vehicle can mitigate spray drift caused by wind blowing too strongly and/or in the wrong direction by landing, walking to a required spot, and spraying a liquid onto plants. Furthermore, the UAV can mitigate wash-off losses caused by rain, by landing when it is raining and spraying at locations through walking to those locations. When, the wind has stopped blowing and/or it has stopped raining, the UAV can take off and continue to spray a crop from the air as required.

In an example, the unmanned aerial vehicle is configured to stop or feather the at least one set of rotor blades when the unmanned aerial vehicle has landed in the environment.

In this manner, power is saved and this mitigates the rotors becoming damaged from hitting the crop and/or the crop becoming damaged from the rotors.

In an example, at least one protective cage or protective mesh surrounds the at least one set of rotor blades.

This mitigates the rotors becoming damaged from hitting the crop and/or the crop becoming damaged from the rotors.

In an example, the unmanned aerial vehicle is configured to fly to a location to apply the liquid to at least one plant whilst the unmanned aerial vehicle is flying, and wherein the location is determined based on image analysis of one or more image of the at least one image of the environment.

In an example, the processing unit is configured to carry out the analysis of the at least one image to determine the location for application of the liquid to the at least one plant whilst the unmanned aerial vehicle is flying.

Thus, the UAV or drone can determine autonomously where to land, and determine where to walk to and determine exactly where to spray at that final location. Thus, a completely automated solution is provided for a drone that can fly around a field and spray targeted plants. If necessary, for example due to inclement weather, the drone can continue to spray by continuing to determine what crop plants need to be sprayed, but now determining where to land and how to walk to that location for spraying of plants. Thus, spraying of a crop can be carried out taking into account weather situations that would stop other drones from spraying a crop, due to for example spray drift issues or run-off.

In an example, the processing unit is configured to utilize an algorithm to determine locations within the environment to which the unmanned aerial vehicle should walk to apply the liquid to at least one plant whilst on the ground and locations within the environment to which the unmanned aerial vehicle should fly to apply the liquid to at least one plant whilst in the air. The determination comprises an analysis of the at least one image.

In an example, the determination of the locations to which the unmanned aerial vehicle should walk to apply the liquid and the determination of the locations to which the unmanned aerial should fly to apply the liquid, comprises utilization of a determined power level of a battery configured to power the unmanned aerial vehicle and/or comprises utilization of a determined operation duration required for the environment.

In this manner, and efficient spray plan can be devised or determined, that determines where to land and walk and spray where to fly and spray. In this way, the battery life can be maximised and/or the area can be sprayed most speedily and efficiently, that can account for changing weather conditions.

In an example, each of the at least one liquid application unit is situated beneath one or more of the at least one set of rotor blades.

In an example, each liquid application unit of the at least one liquid application unit is situated beneath a different set of rotor blades of the at least one set of rotor blades.

In this way, the sprayed liquid can be entrained within the down wash of the rotors. Thus, when flying and spraying the downwash can be provided by that used to generate lift for the drone. And, whilst on the ground and walking, the rotors can operate at a speed that generates an entraining downwash, but does not lead to take off. The drone can have protective meshes or cages surrounding the rotor blades, to stop the rotors being damaged and/or the crop from being damaged.

In an example, the at least one liquid application unit comprises at least one nozzle applicator or at least one spinning disc applicator.

According to a second aspect, there is provided a method for application of an active ingredient by an unmanned aerial vehicle to agricultural crops, wherein the unmanned aerial vehicle comprises at least one liquid reservoir, at least one liquid application unit, at least one set of rotor blades, and a plurality of legs; and wherein the method comprises:
a) holding a liquid comprising the active ingredient in the liquid reservoir housed within or attached to a body of the unmanned aerial vehicle, wherein the at least one liquid application unit is connected to the body of the unmanned aerial vehicle, and the at least one liquid application unit is in fluid communication with the liquid reservoir;
b) receiving by the at least one liquid application unit at least one input from a processing unit, wherein the at least one input is useable to activate the at least one liquid application unit;
c) flying the unmanned aerial vehicle within an environment using the at least one set of rotor blades;
d) landing the unmanned aerial vehicle within the environment to apply the liquid to at least one plant; and
e) walking on the plurality of legs to a location to apply the liquid to at least one plant, wherein the location is determined based on image analysis of one or more image of at least one image of the environment.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an unmanned aerial vehicle for application of an active ingredient to agricultural crops;
Fig. 2 shows a method for application of an active ingredient by an unmanned aerial vehicle to agricultural crops; and
Figs. 3a-3f show detailed examples of unmanned aerial vehicles in operation.

### DETAILED DESCRIPTION OF EMBODIMENTS

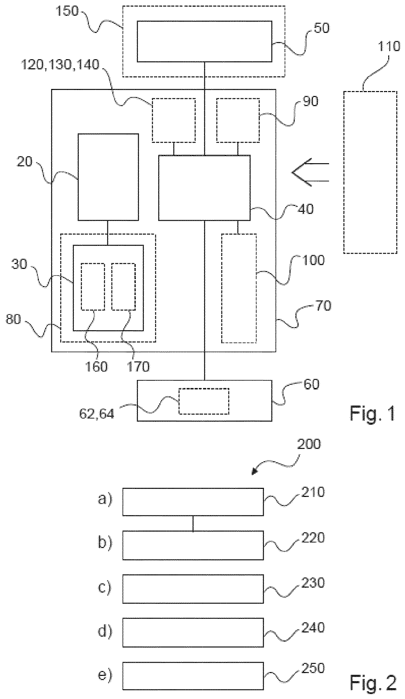

Fig. 1 shows an example of an unmanned aerial vehicle (UAV) 10 for application of an active ingredient to agricultural crops. Features shown in solid lines are essential features, whilst features shown in hashed lines are optional. The UAV comprises at least one liquid reservoir 20, at least one liquid application unit 30, a processing unit 40, at least one set of rotor blades 50, and a plurality of legs 60. This could be three legs, four legs or even more than four legs. The liquid reservoir is configured to hold a liquid comprising the active ingredient. The at least one liquid application unit is in fluid communication with the at least one liquid reservoir. The at least one liquid application unit is configured to receive at least one input from the processing unit. The at least one input is useable to activate the at least one liquid application unit. The unmanned aerial vehicle is configured to fly within an environment using the at least one set of rotor blades. The unmanned aerial vehicle is configured to land within the environment. The unmanned aerial vehicle is configured to walk on the plurality of legs to a location to apply the liquid to at least one plant. The location to apply the liquid is determined based on image analysis of one or more image of at least one image of the environment.

In an example, the liquid application unit comprises a spray gun or spray nozzle or rotating disc, configured to spray the liquid that can comprises atomization of that liquid as part of the spray process.

In an example, the liquid application unit comprises an application device configured to contact vegetation during application of the liquid. An example of such an application device is a paintbrush type device, which dispenses liquid to the brushes which is applied to foliage in a brushing manner.

In an example, the unmanned aerial vehicle comprises moveable vegetation holding means, and when the unmanned aerial vehicle has landed within the environment the processor is configured to move the vegetation holding means to hold the at least one plant based on the image analysis of the at least one image of the environment. Thus a plant to which the liquid is being applied can be held steady during application. In an example, the moveable vegetation holding means comprises a moveable arm. In an example, the moveable arm is extendable.

In an example, the unmanned aerial vehicle is used for weed control along railway tracks and the surrounding area.

According to an example, the processing unit is configured to carry out the analysis of the one or more image of the at least one image to determine the location for application of the liquid to the at least one plant.

In an example, analysis of the at least one image to determine the at least one location for activation of the liquid application unit comprises a determination of at least one weed, and/or comprises a determination of at least one disease, and/or comprises a determination of at least one pest, and/or comprises a determination of at least one insect, and/or comprises a determination of at least one nutritional deficiency.

According to an example, analysis of the at least one image to determine the at least one location for application of the liquid comprises a determination of at least one type of weed, and/or comprises a determination of at least one type of disease.

According to an example, analysis of the at least one image to determine the at least one location for application of the liquid comprises a determination of at least one type of pest, and/or comprises a determination of at least one type of insect.

According to an example, analysis of the at least one image to determine the at least one location for application of the liquid comprises a determination of at least one type of nutritional deficiency.

In an example, analysis of the at least one image comprises utilisation of a machine learning algorithm.

In an example, the machine learning algorithm comprises a decision tree algorithm.

In an example, the machine learning algorithm comprises an artificial neural network.

In an example, the machine learning algorithm has been taught on the basis of a plurality of images. In an example, the machine learning algorithm has been taught on the basis of a plurality of images containing imagery of at least one type of weed, and/or at least of type of plant suffering from one or more diseases, and/or at least one type of plant suffering from insect infestation from one or more types of insect, and/or at least one type of insect (when the imagery has sufficient resolution), and/or at least one type of plant suffering from one or more pests, and/or at least one type of plant suffering from one or more types of nutritional deficiency. In an example, the machine learning algorithm has been taught on the basis of a plurality of images containing such imagery.

Thus a UAV (also called a drone) can have a one camera and a processing unit which uses the imagery acquired by the camera to activate the liquid application unit. The camera acquires imagery of the environment of a field. The imagery need not be acquired by the drone, but could be acquired by a different drone and then passed to the drone for processing. The imagery acquired by the camera is at a resolution that enables vegetation to be identified as vegetation and indeed can be at resolution that enables one type of weed to be differentiated from another type of weed. The imagery can be at a resolution that enables pest or insect infested crops to be determined, either from the imagery of the crop itself or from acquisition of for examples insects themselves. The drone can have a Global Positioning System (GPS) and this enables the location of acquired imagery to be determined. For example the orientation of cameras and the position of the drone when imagery was acquired can be used to determine the geographical footprint of the image at the ground plane. The drone can also have inertial navigation systems, based for example on laser gyroscopes. In addition to being used to determine the orientation of the drone and hence of the camera, facilitating a determination of where on the ground the imagery has been acquired, the inertial navigation systems can function alone without a GPS to determine the position of the drone, by determining movement away from a known or a number of known locations, such as the filling/charging station. The camera passes the acquired imagery to the processing unit. Image analysis software operates on the processing unit. The image analysis software can use feature extraction, such as edge detection, and object detection analysis that for example can identify structures such in and around the field such as buildings, roads, fences, hedges, etc. Thus, on the basis of known locations of such objects, the processing unit can patch the acquired imagery to in effect create a synthetic representation of the environment that can in effect be overlaid over a geographical map of the environment. Thus, the geographical location of each image can be determined, and there need not be associated GPS and/or inertial navigation based information associated with acquired imagery. In other words, an image based location system can be used to locate the drone. However, if there is GPS and/or inertial navigation information available then such image analysis, that can place specific images at specific geographical locations only on the basis of the imagery, is not required. Although, if GPS and/or inertial navigation based information is available then such image analysis can be used to augment the geographical location associated with an image.

The processing unit runs further image processing software. This software analyses an image to determine the areas within the image where vegetation is to be found, and also analyses the imagery to determine where vegetation is not to be found (for example at pathways across a field, around the borders of a field and even tractor wheel tracks across a field). This latter information can be used to determine where the liquid is not required to be applied.

Vegetation can be detected based on the shape of features within acquired images, where for example edge detection software is used to delineate the outer perimeter of objects and the outer perimeter of features within the outer perimeter of the object itself; organic material between ballast can be detected in a similar manner when the unmanned aerial vehicle is used for weed control along a railway track environment. A database of vegetation imagery can be used in helping determine if a feature in imagery relates to vegetation or not, using for example a trained machine learning algorithm such as an artificial neural network or decision tree analysis. The camera can acquire multi-spectral imagery, with imagery having information relating to the colour within images, and this can be used alone, or in combination with feature detection to determine where in an image vegetation is to be found. As discussed above, because the geographical location of an image can be determined, from knowledge of the size of an image on the ground, the location or locations of vegetation, and/or other areas where the liquid is to be applied, can be found in an image and can then be mapped to the exact position of that vegetation (area) on the ground.

The processing unit has access to a database containing different weed types, and the optimum liquid to be applied over that weed. This database has been compiled from experimentally determined data. The image processing software, using the machine learning algorithm, has also been taught to recognize insects, plants infested with insects, plants suffering from pests, and plants that are suffering from nutritional deficiencies. This is done in the same manner as discussed above, through training based on previously acquired imagery. The database also contains what liquid should be applied in what situation.

According to an example, a landing location for the unmanned aerial vehicle is determined based on image analysis of one or more image of the at least one image of the environment.

According to an example, the one or more image analysed for the determination of the landing location is the same as the one or more image analysed for the determination of the location to apply the liquid to at least one plant.

According to an example, the one or more image analysed for the determination of the landing location is different to the one or more image analysed for the determination of the location to apply the liquid to at least one plant.

According to an example, an end 62 of each of the plurality of legs that is distal to an end that is connected to a body 70 of the unmanned aerial vehicle comprises at least one stability structure 64.

In an example, the at least one stability structure comprises one or more of: a spike; a disc; a ball; a cone; a mesh.

According to an example, the at least one liquid application unit is moveable with respect to a body of the unmanned aerial vehicle. The processing unit of the unmanned aerial vehicle is configured to move the at least liquid application unit.

According to an example, the at least one liquid application unit is mounted on at least one extendable arm 80.

According to an example, when the unmanned aerial vehicle has landed and walked to the location for application of the liquid to at least one plant, the processor is configured to move the at least one liquid application unit to a specific location for activation of the at least one liquid application unit based on the image analysis of one or more image of the at least one image of the environment.

According to an example, the unmanned aerial vehicle comprises a camera 90 connected to a body of the unmanned aerial vehicle, wherein the camera is configured to acquire the at least one image.

According to an example, the camera is configured to move with respect to the body of the unmanned aerial vehicle. The processing unit of the unmanned aerial vehicle is configured to move the camera.

In an example, the camera is mounted on an extendable arm.

In an example, the extendable arm upon which the camera is mounted is the same extendable arm upon which the liquid application unit is mounted.

In an example, determination of the location for activation of the liquid application unit comprises movement of the camera.

In an example, the processor of the unmanned aerial vehicle that is configured to move the camera is the processing unit that is configured to analyse the image of the environment.

According to an example, the unmanned aerial vehicle is configured to determine the location for application of the liquid after the unmanned aerial vehicle has landed within the environment.

According to an example, the unmanned aerial vehicle is configured to determine the location for application of the liquid before the unmanned aerial vehicle has landed within the environment.

According to an example, the unmanned aerial the vehicle comprises location determining means 100.

In an example, the location determining means is configured to provide the processing unit with at least one location associated with the camera when the at least one image was acquired.

The location can be a geographical location, with respect to a precise location on the ground, or can be a location on the ground that is referenced to another position or positions on the ground, such as a boundary of a field or the location of a drone docking station or charging station. In other words, an absolute geographical location can be utilized or a location on the ground that need not be known in absolute terms, but that is referenced to a known location can be used. Thus, by correlating an image with the location where it was acquired, the liquid application unit can be accurately activated to that location. Thus, even when for example a drone has run out of liquid, and is flying back to a larger reservoir to fill up with liquid, it can continue to acquire imagery to be used to activate the liquid application unit at specific locations even if that location is not immediately addressed but is liquid is applied later when the drone has re-charged. Also, when the drone determines that a location should have a liquid applied that it is not carrying that information can be logged and used by that drone later when it carries the required liquid or transmitted to another drone that carries that liquid, and that other drone can fly to the location and apply its liquid at that location.

In an example, the location is an absolute geographical location.

In an example, the location is a location that is determined with reference to a known location or locations. In other words, an image can be determined to be associated with a specific location on the ground, without knowing its precise geographical position, but by knowing the location where an image was acquired with respect to known position(s) on the ground the liquid application unit can then be activated at a later time at that location by moving the liquid application unit to that location or enabling another unmanned aerial vehicle to move to that location at activate its liquid application unit at that location.

In an example, a GPS unit is used to determine, and/or is used in determining, the location, such as the location of the camera when specific images were acquired.

In an example, an inertial navigation unit is used alone, or in combination with a GPS unit, to determine the location, such as the location of the camera when specific images were acquired. Thus for example, the inertial navigation unit, comprising for example one or more laser gyroscopes, is calibrated or zeroed at a known location (such as a drone docking or charging station) and as it moves with the at least one camera the movement away from that known location in x, y, and z coordinates can be determined, from which the location of the at least one camera when images were acquired can be determined.

In an example, image processing of acquired imagery is used alone, or in combination with a GPS unit, or in combination with a GPS unit and inertial navigation unit, to determine the location, such as the location of the camera when specific images were acquired. In other words, as the vehicle moves it can acquire imagery that is used to render a synthetic representation of the environment and from specific markers, such as the position of trees, field boundaries, roads etc. the vehicle can determine its position within that synthetic environment from imagery it acquires.

According to an example, a determination is made to land and walk to the location to apply the liquid based on one or more of: a wind speed, a wind direction, a state of precipitation.

According to an example, the unmanned aerial vehicle is configured to receive information from an external system 110 relating to one or more of: the wind speed, the wind direction, the state of precipitation.

According to an example, the unmanned aerial vehicle comprises one or more of: a wind speed sensor 120, a wind direction sensor 130, a precipitation sensor 140.

According to an example, the unmanned aerial vehicle is configured to stop or feather the at least one set of rotor blades when the unmanned aerial vehicle has landed in the environment.

According to an example, at least one protective cage or protective mesh 150 surrounds the at least one set of rotor blades.

According to an example, the unmanned aerial vehicle is configured to fly to a location to apply the liquid to at least one plant whilst the unmanned aerial vehicle is flying, wherein the location is determined based on image analysis of one or more image of the at least one image of the environment.

According to an example, the processing unit is configured to carry out the analysis of the at least one image to determine the location for application of the liquid to the at least one plant whilst the unmanned aerial vehicle is flying.

According to an example, the processing unit is configured to utilize an algorithm to determine locations within the environment to which the unmanned aerial vehicle should walk to apply the liquid to at least one plant whilst on the ground and locations within the environment to which the unmanned aerial vehicle should fly to apply the liquid to at least one plant whilst in the air, wherein the determination comprises an analysis of the at least one image.

According to an example, the determination of the locations to which the unmanned aerial vehicle should walk to apply the liquid comprises utilization of a determined power level of a battery configured to power the unmanned aerial vehicle and/or comprises utilization of a determined operation duration required for the environment. Also, the determination of the locations to which the unmanned aerial should fly to apply the liquid, comprises utilization of the determined power level of a battery configured to power the unmanned aerial vehicle and/or comprises utilization of the determined operation duration required for the environment.

According to an example, each of the at least one liquid application unit is situated beneath one or more of the at least one set of rotor blades.

According to an example, each liquid application unit of the at least one liquid application unit is situated beneath a different set of rotor blades of the at least one set of rotor blades.

According to an example, the at least one liquid application unit comprises at least one nozzle applicator 160 or at least one spinning disc applicator 170.

Fig. 2 shows an example of a method 200 for application of an active ingredient by an unmanned aerial vehicle to agricultural crops in its basic steps. The unmanned aerial vehicle comprises at least one liquid reservoir, at least one liquid application unit, at least one set of rotor blades, and a plurality of legs. The method 200 comprises:
in a holding step 210, also referred to as step a), holding a liquid comprising the active ingredient in the liquid reservoir housed within or attached to a body of the unmanned aerial vehicle, wherein the at least one liquid application unit is connected to the body of the unmanned aerial vehicle, and the at least one liquid application unit is in fluid communication with the liquid reservoir;
in a receiving step 220, also referred to as step b), receiving by the at least one liquid application unit at least one input from a processing unit, wherein the at least one input is useable to activate the at least one liquid application unit;
in a flying step 230, also referred to as step c), flying the unmanned aerial vehicle within an environment using the at least one set of rotor blades;
in a landing step 240, also referred to as step d), landing the unmanned aerial vehicle within the environment to apply the liquid to at least one plant; and
in a walking step 250, also referred to as step e), walking on the plurality of legs to a location to apply the liquid to at least one plant, wherein the location is determined based on image analysis of one or more image of at least one image of the environment.

In an example, the method comprises analysing by the processing unit the one or more image of the at least one image to determine the location for application of the liquid to the at least one plant.

In an example, the analysing of the at least one image to determine the at least one location for application of the liquid comprises a determination of at least one type of weed, and/or comprises a determination of at least one type of disease, and/or comprises a determination of at least one type of pest, and/or comprises a determination of at least one type of insect, and/or comprises a determination of at least one type of nutritional deficiency.

In an example, the method comprise determining a landing location for the unmanned aerial vehicle based on image analysis of one or more image of the at least one image of the environment acquired by the camera.

In an example, the one or more image analysed for the determination of the landing location is the same as the one or more image analysed for the determination of the location to apply the liquid to at least one plant.

In an example, the one or more image analysed for the determination of the landing location is different to the one or more image analysed for the determination of the location to apply the liquid to at least one plant.

In an example, an end of each of the plurality of legs that is distal to an end that is connected to a body of the unmanned aerial vehicle comprises at least one stability structure.

In an example, the at least one liquid application unit is moveable with respect to a body of the unmanned aerial vehicle, and wherein the method comprises moving the at least liquid application unit under control of the processing unit of the UAV.

In an example, the at least one liquid application unit is mounted on at least one extendable arm.

In an example, when the unmanned aerial vehicle has landed and walked to the location for application of the liquid to at least one plant, the method comprises moving the at least one liquid application unit under control of the processing unit to a specific location for activation of the at least one liquid application unit based on the image analysis of one or more image of the at least one image of the environment.

In an example, the unmanned aerial vehicle comprises a camera connected to a body of the unmanned aerial vehicle, wherein the camera is configured to acquire the at least one image.

In an example, the camera is configured to move with respect to the body of the unmanned aerial vehicle, wherein the processing unit of the unmanned aerial vehicle is configured to move the camera.

In an example, the method comprises determining the location for application of the liquid after the unmanned aerial vehicle has landed within the environment.

In an example, the method comprises determining the location for application of the liquid before the unmanned aerial vehicle has landed within the environment.

In an example, the unmanned aerial the vehicle comprises location determining means.

In an example, the method comprises determining to land and walk to the location to apply the liquid based on one or more of: a wind speed, a wind direction, a state of precipitation.

In an example, the method comprises receiving information by the unmanned aerial vehicle from an external system relating to one or more of: the wind speed, the wind direction, the state of precipitation.

In an example, the unmanned aerial vehicle comprises one or more of: a wind speed sensor, a wind direction sensor, a precipitation sensor.

In an example, the method comprises stopping or feathering the at least one set of rotor blades when the unmanned aerial vehicle has landed in the environment.

In an example, at least one protective cage or protective mesh surrounds the at least one set of rotor blades.

In an example, wherein the method comprises flying the unmanned aerial vehicle to a location to apply the liquid to at least one plant whilst the unmanned aerial vehicle is flying, wherein the method comprises determining location based on image analysis of one or more image of the at least one image of the environment.

In an example, the method comprises analyzing by the processing unit the at least one image and determining the location for application of the liquid to the at least one plant whilst the unmanned aerial vehicle is flying.

In an example, wherein the method comprises utilization of an algorithm to determine locations within the environment to which the unmanned aerial vehicle should walk to apply the liquid to at least one plant whilst on the ground and locations within the environment to which the unmanned aerial vehicle should fly to apply the liquid to at least one plant whilst in the air, wherein the determination is comprises an analysis of the at least one image.

In an example, wherein the determining of the locations to which the unmanned aerial vehicle should walk to apply the liquid and the determining of the locations to which the unmanned aerial should fly to apply the liquid, comprises utilizing a determined power level of a battery configured to power the unmanned aerial vehicle and/or comprises utilizing a determined spray duration required for the environment.

In an example, each of the at least one liquid application unit is situated beneath one or more of the at least one set of rotor blades.

In an example, each liquid application unit of the at least one liquid application unit is situated beneath a different set of rotor blades of the at least one set of rotor blades.

In an example, the at least one liquid application unit comprises at least one nozzle applicator or at least one spinning disc applicator.

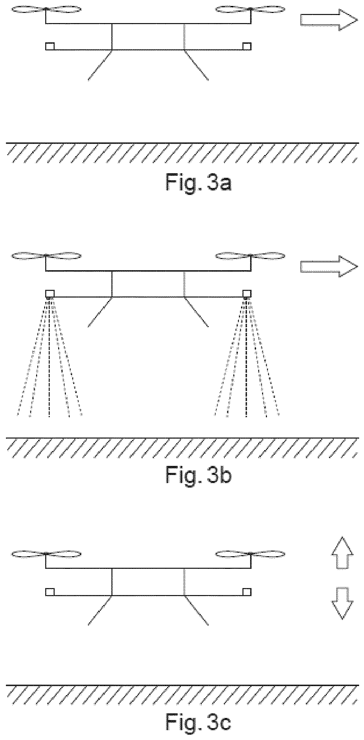

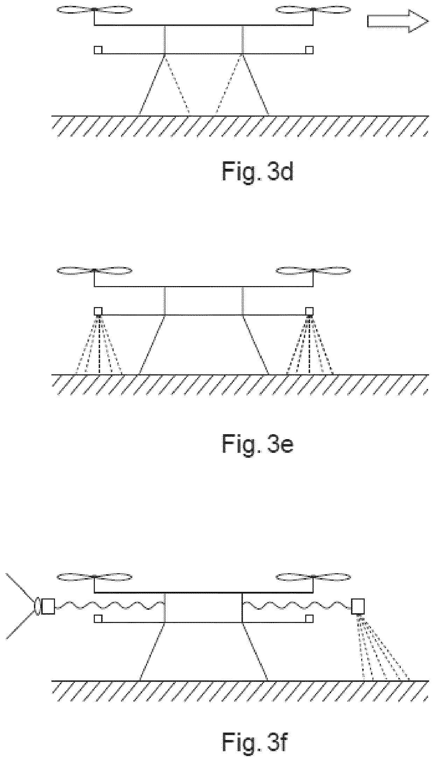

Figs. 3a-3f show detailed examples of UAVs flying around, and landing within an environment. The individual figures can relate to the same UAV, but can relate to different UAVs. In Fig. 3a, a UAV (also called a drone) is flying around an environment. Its camera, shown in Fig. 3f, can acquire imagery that is analysed to determine where crop plants need to be sprayed, and is analysed to determine where to land, in order that the UAV can walk to that location (see Figs. 3c, 3d, 3e and 3f). The UAV also analyses the imagery and determines where it should fly and spray the crop whilst flying, see Fig. 3b. The UAV uses an algorithm to determine, based on its battery lifetime, and on the time required to spray the environment, where it should land, and then walk, and where it should fly. An example of such an algorithm is a Monte-Carlo minimization routine - for example, this UAV or a different UAV can scan the environment to determine where crop needs to be sprayed, and the UAV as shown in Fig. 3 then determines how best to divided that spraying between walking and flying. Whilst on the ground, as shown in Fig. 3f, the camera can be on an extendable arm to better view the environment, and can also rotate, and one of the spray units is also located on an extendable arm to better spray specific plants or parts of those plants. The liquid chemical can also be applied using a brush to directly apply the chemical. Other spray units are located directly under the rotors, and in this way the spray becomes entrained in the downwash and suffers from reduced drift due to the wind. The rotors can still operate when the UAV is on the ground to entrain the spray, but not generate sufficient lift for take-off and clearly such entrainment applies when the UAV sprays whilst flying. A cage or mesh, not shown, surrounds each of the rotors in order that the rotors are not damaged by vegetation, and that vegetation is not damaged by the rotors.

The processing unit 50 then runs further image processing software that can be part of the image processing that determines vegetation location on the basis of feature extraction, if that is used. This software comprises a machine learning analyser. Images of specific weeds are acquired, with information also relating to the size of weeds being used. Information relating to a geographical location in the world, where such a weed is to be found and information relating to a time of year when that weed is to be found, including when in flower etc. can be tagged with the imagery. The names of the weeds can also be tagged with the imagery of the weeds. The machine learning analyser, which can be based on an artificial neural network or a decision tree analyser, is then trained on this ground truth acquired imagery. In this way, when a new image of vegetation is presented to the analyser, where such an image can have an associated time stamp such as time of year and a geographical location such as Germany or South Africa tagged to it, the analyser determines the specific type of weed that is in the image through a comparison of imagery of a weed found in the new image with imagery of different weeds it has been trained on, where the size of weeds, and where and when they grow can also be taken into account. The specific location of that weed type on the ground within the environment, and its size, can therefore be determined.

In this way significantly less active ingredient(s) is required since the target weeds, insects and disease are treated directly rather than the whole crop. Furthermore, products can be applied directly and do not first need to be diluted in larger volumes of water for spray application. This has the additional advantage that the weight of product for application that the drone carries can be substantially reduced allowing for the use of much smaller, cheaper and more efficient drones with extended operating times between recharging or exchange of the batteries. Similarly, this application method allows the formulator to exploit the advantages of more concentrated active ingredients and surfactants in smaller deposits.

Thus, purposely designed formulations with appropriate physical stability can be utilized, providing appropriate wetting for the crop, appropriate biodelivery for the active ingredients, and appropriate resistance to wash-off by rain.

Off-target losses by drift can be greatly reduced or even effectively eliminated, allowing application to occur in populated and environmentally sensitive areas. Furthermore, the drone can continue to operate in conditions where the wind is too strong for application methods that generate even low levels of spray drift.

The drone can operate autonomously, reducing the labour required to control targets in agricultural crops.

The images from the camera can be analysed by suitable image analysis software to identify targets. This can be performed autonomously onboard the drone with a dedicated processing unit or it can be performed remotely by a separate processing unit with/without input from the operator.

### Weed type determination

The following relates to one method by which an image can be processed to determine a type of plant/weed, that also has utility for the detection of types of insects as would be appreciate by the skilled person:
1. An image of a plant is acquired.
2. Different parts of the plant are segmented, for example through contouring.
3. Image data that is within a segment boundary for example within a contour is analysed by an artificial neural network to determine the type of weed.
4. The above can be used to determine one type of crop plant from another type of crop plant, and to detect and identify insects.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An unmanned aerial vehicle (10) for application of an active ingredient to agricultural crops, comprising:
- at least one liquid reservoir (20);
- at least one liquid application unit (30);
- a processing unit (40);
- at least one set of rotor blades (50); and
- a plurality of legs (60);
wherein the liquid reservoir is configured to hold a liquid comprising the active ingredient;
wherein, the at least one liquid application unit is in fluid communication with the at least one liquid reservoir;
wherein, the at least one liquid application unit is configured to receive at least one input from the processing unit, wherein the at least one input is useable to activate the at least one liquid application unit;
wherein, the unmanned aerial vehicle is configured to fly within an environment using the at least one set of rotor blades;
wherein, the unmanned aerial vehicle is configured to land within the environment; and
wherein, the unmanned aerial vehicle is configured to walk on the plurality of legs to a location to apply the liquid to at least one plant, and wherein the location is determined based on image analysis of one or more image of at least one image of the environment.

2. Unmanned aerial vehicle according to claim 1, wherein the processing unit is configured to carry out the analysis of the one or more image of the at least one image to determine the location for application of the liquid to the at least one plant.

3. Unmanned aerial vehicle according to any of claims 1-2, wherein analysis of the at least one image to determine the at least one location for application of the liquid comprises a determination of at least one type of weed, and/or comprises a determination of at least one type of disease, and/or comprises a determination of at least one type of pest, and/or comprises a determination of at least one type of insect, and/or comprises a determination of at least one type of nutritional deficiency.

4. Unmanned aerial vehicle according to any of claims 1-3, wherein a landing location for the unmanned aerial vehicle is determined based on image analysis of one or more image of the at least one image of the environment.

5. Unmanned aerial vehicle according to claim 4, wherein the one or more image analysed for the determination of the landing location is the same as the one or more image analysed for the determination of the location to apply the liquid to at least one plant.

6. Unmanned aerial vehicle according to claim 4, wherein the one or more image analysed for the determination of the landing location is different to the one or more image analysed for the determination of the location to apply the liquid to at least one plant.

7. Unmanned aerial vehicle according to any of claims 1-6, wherein an end (62) of each of the plurality of legs that is distal to an end that is connected to a body (70) of the unmanned aerial vehicle comprises at least one stability structure (64).

8. Unmanned aerial vehicle according to any of claims 1-7, wherein the at least one liquid application unit is moveable with respect to a body of the unmanned aerial vehicle, wherein the processing unit of the unmanned aerial vehicle is configured to move the at least liquid application unit.

9. Unmanned aerial vehicle according to claim 8, wherein the at least one liquid application unit is mounted on at least one extendable arm (80).

10. Unmanned aerial vehicle according to any of claims 8-9, wherein when the unmanned aerial vehicle has landed and walked to the location for application of the liquid to at least one plant, the processor is configured to move the at least one liquid application unit to a specific location for activation of the at least one liquid application unit based on the image analysis of one or more image of the at least one image of the environment.

11. Unmanned aerial vehicle according to any of claims 1-10, wherein the unmanned aerial vehicle comprises a camera (90) connected to a body of the unmanned aerial vehicle, wherein the camera is configured to acquire the at least one image.

12. Unmanned aerial vehicle according to claim 11, wherein the camera is configured to move with respect to the body of the unmanned aerial vehicle, wherein the processing unit of the unmanned aerial vehicle is configured to move the camera.

13. Unmanned aerial vehicle according to any of claims 1-12, wherein the unmanned aerial vehicle is configured to determine the location for application of the liquid after the unmanned aerial vehicle has landed within the environment.

14. Unmanned aerial vehicle according to any of claims 1-13, wherein the unmanned aerial vehicle is configured to determine the location for application of the liquid before the unmanned aerial vehicle has landed within the environment.

15. Unmanned aerial vehicle according to any of claims 1-14, wherein the unmanned aerial the vehicle comprises location determining means (100).

16. Unmanned aerial vehicle according to any of claims 1-15, wherein a determination is made to land and walk to the location to apply the liquid based on one or more of: a wind speed, a wind direction, a state of precipitation.

17. Unmanned aerial vehicle according to claim 16, wherein the unmanned aerial vehicle is configured to receive information from an external system (110) relating to one or more of: the wind speed, the wind direction, the state of precipitation.

18. Unmanned aerial vehicle according to any of claims 16-17, wherein the unmanned aerial vehicle comprises one or more of: a wind speed sensor (120), a wind direction sensor (130), a precipitation sensor (140).

19. Unmanned aerial vehicle according to any of claims 1-18, wherein the unmanned aerial vehicle is configured to stop or feather the at least one set of rotor blades when the unmanned aerial vehicle has landed in the environment.

20. Unmanned aerial vehicle according to any of claims 1-19, wherein at least one protective cage or protective mesh (150) surrounds the at least one set of rotor blades.

21. Unmanned aerial vehicle according to any of claims 1-20, wherein the unmanned aerial vehicle is configured to fly to a location to apply the liquid to at least one plant whilst the unmanned aerial vehicle is flying, wherein the location is determined based on image analysis of one or more image of the at least one image of the environment.

22. Unmanned aerial vehicle according to claim 21, wherein the processing unit is configured to carry out the analysis of the at least one image to determine the location for application of the liquid to the at least one plant whilst the unmanned aerial vehicle is flying.

23. Unmanned aerial vehicle according to any of claims 21-22, wherein the processing unit is configured to utilize an algorithm to determine locations within the environment to which the unmanned aerial vehicle should walk to apply the liquid to at least one plant whilst on the ground and locations within the environment to which the unmanned aerial vehicle should fly to apply the liquid to at least one plant whilst in the air, wherein the determination comprises an analysis of the at least one image.

24. Unmanned aerial vehicle according to claim 23, wherein the determination of the locations to which the unmanned aerial vehicle should walk to apply the liquid and the determination of the locations to which the unmanned aerial should fly to apply the liquid, comprises utilization of a determined power level of a battery configured to power the unmanned aerial vehicle and/or comprises utilization of a determined operation duration required for the environment.

25. Unmanned aerial vehicle according to any of claims 1-24, wherein each of the at least one liquid application unit is situated beneath one or more of the at least one set of rotor blades.

26. Unmanned aerial vehicle according to claim 25, wherein each liquid application unit of the at least one liquid application unit is situated beneath a different set of rotor blades of the at least one set of rotor blades.

27. Unmanned aerial vehicle according to any of claims 1-26, wherein the at least one liquid application unit comprises at least one nozzle applicator (160) or at least one spinning disc applicator (170).

28. A method (200) for application of an active ingredient by an unmanned aerial vehicle to agricultural crops, wherein the unmanned aerial vehicle comprises at least one liquid reservoir, at least one liquid application unit, at least one set of rotor blades, and a plurality of legs; the method comprising:
a) holding (210) a liquid comprising the active ingredient in the liquid reservoir housed within or attached to a body of the unmanned aerial vehicle, wherein the at least one liquid application unit is connected to the body of the unmanned aerial vehicle, and the at least one liquid application unit is in fluid communication with the liquid reservoir;
b) receiving (220) by the at least one liquid application unit at least one input from a processing unit, wherein the at least one input is useable to activate the at least one liquid application unit;
c) flying (230) the unmanned aerial vehicle within an environment using the at least one set of rotor blades;
d) landing (240) the unmanned aerial vehicle within the environment to apply the liquid to at least one plant; and
e) walking (250) on the plurality of legs to a location to apply the liquid to at least one plant, wherein the location is determined based on image analysis of one or more image of at least one image of the environment.
